# FASCICULE DE BREVET EUROPEEN

(11) **EP 2 014 147 B1**
(45) Date de publication et mention de la délivrance du brevet: **22.12.2010**
(21) Numéro de dépôt: 08104658.3
(22) Date de dépôt: 07.07.2008
(51) Int. Cl.: A01C 15/00

(54) **Appareil de distribution comprenant un réservoir de stockage perfectionné**
Verteilungsgerät mit einem verbesserten Behälter
Distribution device with an improved storage tank

(30) Priorité: 12.07.2007 FR 0756439
(43) Date de publication de la demande: 14.01.2009
(73) Titulaire: Kuhn-Huard S.A., 44142 Châteaubriant (FR)
(72) Inventeur: Tailly, Stéphane, 35150 Janze (FR); Audas, Guillaume, 77515 Saint Augustin (FR); Cueille, Laurent, 44110 Erbray (FR)
(74) Mandataire: Andres, Jean-Claude

(56) Documents cités:
- DE-U1- 9 111 810
- US-A- 4 502 610
- US-A- 5 072 676

## Description

La présente invention concerne un appareil de distribution comprenant un réservoir de stockage avec une partie supérieure et un couvercle permettant de couvrir ladite partie supérieure, ladite partie supérieure présentant un bord supérieur. Elle se rapporte au domaine technique général du machinisme agricole et plus particulièrement pour les appareils de distribution de graines ou de matière en granulés et/ou en poudre.

L'homme de l'art connaît le semoir intégré **i-drill PRO** de la société ACCORD présenté dans la brochure en anglais semoirs pneumatiques ACCORD avec une date d'impression 11/06. Ce semoir connu comprend une trémie ayant une partie supérieure présentant une grande ouverture pour l'approvisionnement en graines. La partie supérieure comporte un bord supérieur. Un couvercle de grande taille est prévu pour couvrir cette ouverture. Le couvercle s'escamote par basculement vers l'avant du semoir, compte tenu de la direction d'avance. Ainsi, le couvercle s'éloigne du bord supérieur par rotation. Le couvercle est articulé sur le bord opposé au bord supérieur au moyen d'articulations disposées sensiblement horizontalement et perpendiculairement à la direction d'avance.

Dans la position ouverte, le couvercle se retrouve donc dans une position sensiblement verticale à l'avant de la trémie. Un approvisionnement par l'avant, compte tenu de la direction d'avance, n'est donc pas possible. La position verticale du couvercle ainsi que la grande distance entre la paroi comprenant le bord supérieur et la paroi avec le bord opposé de la trémie rend la fermeture du couvercle particulièrement difficile. A cause de la grande taille du couvercle, la surface exposée au vent est importante. C'est pourquoi la fermeture du couvercle par basculement depuis la position verticale à la position horizontale est difficile. Le couvercle ainsi que les articulations doivent être dimensionnés en conséquence.

Le document DE91 11 816U décrit une trémie pour un semoir. L'ouverture dans la partie supérieure de la trémie est recouverte par un couvercle. Le couvercle est articulé de chaque côté sur la partie supérieure au moyen d'une bielle respective. La position et l'orientation des articulations entraînent une manipulation pénible car le couvercle s'ouvre vers l'utilisateur. De plus avec une seule paire de bielles, le couvercle n'est pas stable.

Le document US 4 502 610 se rapporte à un couvercle pour une trémie, la partie supérieure de la trémie est couverte par un couvercle réalisé en deux parties. La trémie présente des moyens pour dégager les demi-couvercles dans un plan parallèle au bord supérieur de la trémie. Ces moyens permettent un coulissement d'un demi-couvercle par rapport à l'autre pour se rapprocher ou s'éloigner dans une direction longitudinale. Pour cela chaque demi-couvercle comprend deux rails de guidage destinés à recevoir des galets montés libre en rotation sur les parois opposées de la trémie. Ces moyens doivent être complétés par des butées limitant le coulissement des demi-couvercles dans les deux directions. Cette solution demande l'utilisation d'un grand nombre de pièces. Une telle solution entraîne encore une difficulté technique supplémentaire par rapport à l'étanchéité. Le plan de joint entre les deux demi-couvercles doit être étanche à la pluie et à la poussière, ce qui rend cette solution coûteuse.

La présente invention a pour but de proposer un appareil de distribution avec un réservoir de stockage permettant de remédier aux inconvénients de l'état de la technique et notamment en proposant un réservoir de stockage avec un couvercle qui soit facile à manipuler et dont la surface exposée au vent est réduite.

A cet effet, une importante caractéristique de l'invention consiste en ce que lesdits moyens sont constitués d'au moins une paire de bielles articulée entre ledit réservoir de stockage et ledit couvercle et que lesdites bielles sont disposées de manière à former sensiblement un quadrilatère déformable.

Grâce à un dégagement dans un plan sensiblement parallèle au bord supérieur, la manipulation du couvercle est relativement simple et pratique. De plus, la surface du couvercle exposée au vent est fortement réduite.

D'autres caractéristiques et avantages de l'invention se dégageront des revendications et de la description qui va suivre des exemples de réalisation non limitatifs de l'invention avec référence aux dessins annexés dans lesquels :
- la figure 1 représente une vue de côté d'un appareil de distribution selon l'invention,
- la **figure 2** est une vue en coupe suivant II-II de la figure 1,
- la **figure 3** représente une vue de l'avant du réservoir de stockage avec le couvercle dans une position intermédiaire,
- la **figure 4** est une vue en coupe suivant II-II du réservoir de stockage avec le couvercle dans une position ouverte.

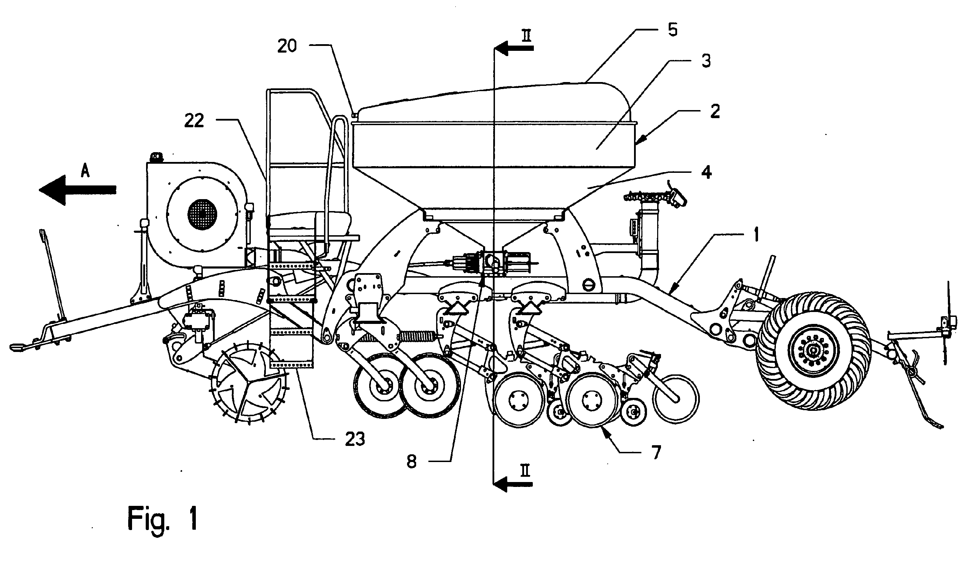

L'appareil de distribution (1) représenté sur la figure 1 comprend un réservoir de stockage (2) avec une partie supérieure (3) à contour sensiblement rectangulaire et une partie inférieure (4) en forme approximative de pyramide renversée. La partie supérieure (3) à contour sensiblement rectangulaire fait office d'ouverture pour l'approvisionnement du réservoir de stockage (2). La partie supérieure (3) présente un bord supérieur (6). Les parois du réservoir de stockage (2) convergent vers la partie inférieure (4). Dans l'exemple illustré, le réservoir de stockage (2) est équipé d'une rehausse (9). La rehausse (9) permet d'augmenter la capacité du réservoir de stockage (2). Pour éviter l'introduction d'impuretés dans le réservoir de stockage (2), sa partie supérieure (3) est protégée par un couvercle (5). Le couvercle (5) repose au moins sensiblement sur le bord supérieur (6) de la partie supérieure (3) lorsqu'il est fermé. Cet appareil (1) peut distribuer des graines ou des matières sous forme de granulés et/ou de poudre. A cet effet, l'appareil de distribution (1) comporte d'une manière connue des éléments (7) pour distribuer des graines ou d'autres substances. Au niveau de la partie inférieure (4) est disposé un organe de dosage (8) qui fournit la quantité de graines ou d'autres substances pour l'ensemble des éléments (7). Les éléments (7) sont par exemple des socs, des buses...

Dans la suite de la description, les notions suivantes "avant" et "arrière", "devant" et "derrière" sont définies par rapport au sens d'avance (A), et les notions "droite" et "gauche" sont définies en regardant l'appareil de distribution (1) de l'arrière dans le sens d'avance (A).

L'appareil de distribution (1) de la figure 1 est un semoir destiné à implanter des graines ou de la semence dans le sol. Le réservoir de stockage (2) est appelé communément trémie et les éléments (7) sont des socs de semis.

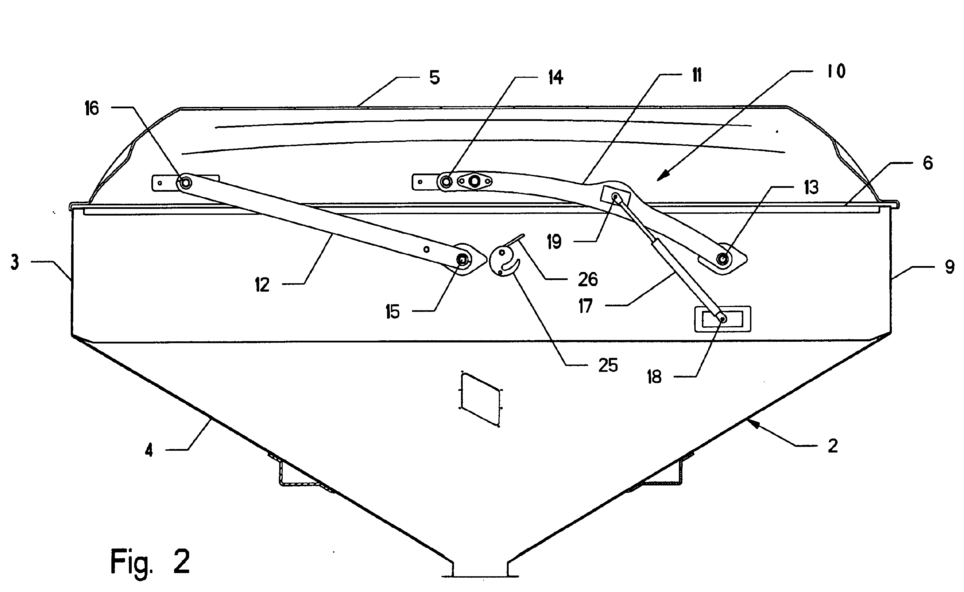

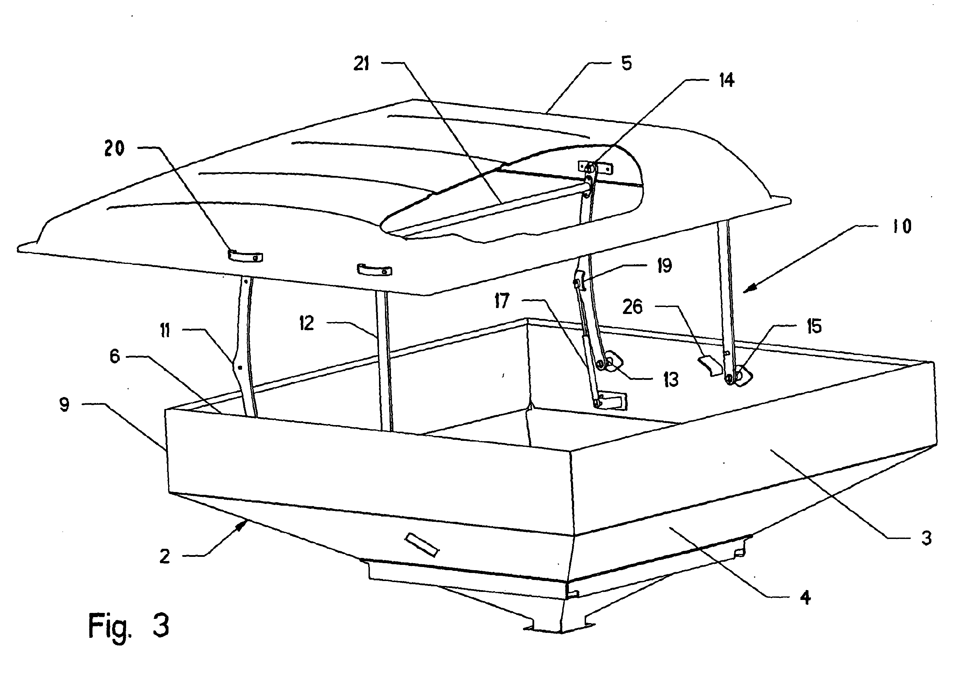

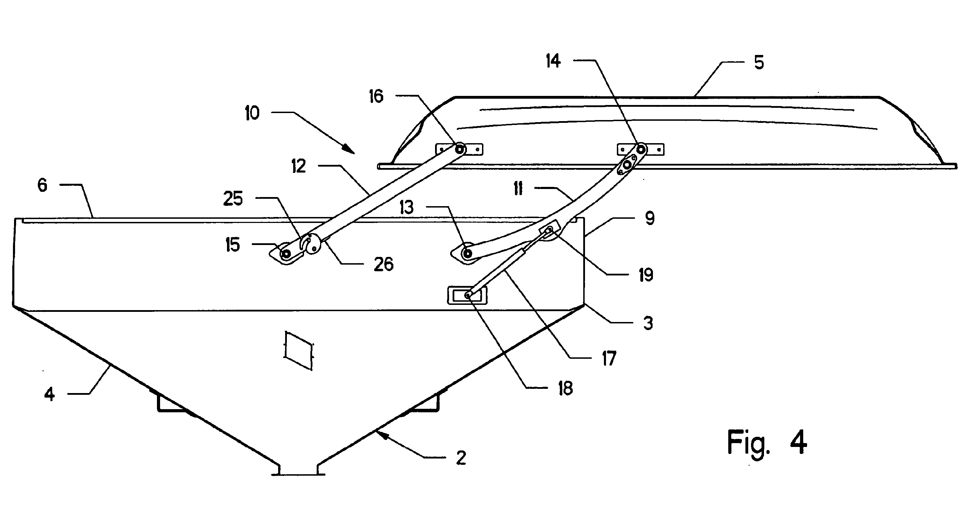

Les figures 2 à 4 représentent le réservoir de stockage (2) avec le couvercle (5) de l'invention dans différentes positions. La figure 2 illustre le réservoir de stockage (2) lors du travail ou pour le remisage hivernal, le couvercle (5) est fermé. Sur la figure 3, le couvercle (5) est dans une position intermédiaire. La figure 4 illustre le couvercle dans une position ouverte ou dégagée. Cette position permet l'approvisionnement du réservoir de stockage (2) durant les travaux de semis. Il est nécessaire de dégager la partie supérieure (3) pour remplir le réservoir de stockage avec des graines. La position intermédiaire est une position du couvercle (5) entre la position ouverte et la position fermée et inversement. Le couvercle (5) est mobile entre une position fermée de travail et une position ouverte de remplissage.

Selon une importante caractéristique de l'invention, le réservoir de stockage (2) présente des moyens (10) permettant un dégagement du couvercle (5) dans un plan sensiblement parallèle au plan contenant le bord supérieur (6) de la partie supérieure (3). Le dégagement dans un plan sensiblement horizontal réduit considérablement la surface du couvercle (5) exposée au vent. La manipulation de ce couvercle (5) est ainsi plutôt simple et pratique.

Avantageusement, les moyens (10) permettant au couvercle (5) de se dégager sont au moins une paire de bielles (11, 12). Les bielles (11, 12) sont liées d'une part au réservoir de stockage (2) et d'autre part au couvercle (5). Elles sont disposées de manière à former sensiblement un quadrilatère déformable. Ce quadrilatère déformable est de préférence un parallélogramme. La première bielle (11) est liée au réservoir de stockage (2) au moyen d'une première articulation (13) et est liée au couvercle (5) au moyen d'une deuxième articulation (14). La deuxième bielle (12) est liée au réservoir de stockage (2) au moyen d'une troisième articulation (15) et est liée au couvercle (5) au moyen d'une quatrième articulation (16). Les articulations (13, 15) sont disposées sensiblement sur une même droite sensiblement horizontale. Cette droite est sensiblement parallèle au bord supérieur (6) du réservoir de stockage (2). La longueur de la première bielle (11) est égale à la longueur de la deuxième bielle (12) et la deuxième bielle (12) est sensiblement parallèle à la première bielle (11). Ainsi, ces bielles (11, 12) forment avantageusement un parallélogramme. Grâce à la cinématique d'un parallélogramme, le couvercle (5) conserve une position sensiblement parallèle au plan contenant le bord supérieur (6) quelle que soit sa position par rapport au réservoir de stockage (2). La surface du couvercle (5) exposée au vent est donc réduite. Le couvercle (5) est déplacé selon un mouvement combiné de rotation et de translation par rapport à la première articulation (13) et à la troisième articulation (15).

Pour limiter les temps d'approvisionnement d'un réservoir de stockage (2) de grande taille, le remplissage se fait couramment à l'aide de big bags. Les big bags sont des sacs de grande capacité contenant environ 500 kg de graines ou de substances. Afin de faciliter un tel approvisionnement par big bags, l'ouverture du couvercle (5) au niveau de la partie supérieure (3) doit être suffisamment grande. Avec les moyens (10) par exemple les bielles (11, 12), le couvercle (5) est dégagé de plus de la moitié de la partie supérieure (3). Lors du remplissage, les graines forment un dôme approximativement au centre du réservoir de stockage (2). Le dôme s'étend habituellement au-dessus du bord supérieur (6) du réservoir de stockage (2). De part la position sur une même droite horizontale des articulations (13, 15) et des bielles (11, 12) formant un parallélogramme, le couvercle (5) couvrira l'ouverture du réservoir de stockage (2) sans interférer avec le dôme lors de sa fermeture. Grâce aux bielles (11, 12), le couvercle (5) se soulève d'une certaine hauteur par rapport à la partie supérieure (3) du réservoir de stockage (2) lors de la fermeture comme lors de l'ouverture. Cette position soulevée est illustrée par la figure 3. On remarque que le couvercle (5) se dégage en hauteur et latéralement en restant dans un plan sensiblement parallèle au bord supérieur (6) lors de son dégagement (figure 4). La conformation des bielles (11, 12) et la position relative des articulations (13, 14, 15, 16) peuvent être optimisées de façon à ce que le couvercle (5) se dégage au maximum de la partie supérieure (3).

D'une manière préférentielle, les moyens (10) sont intégrés dans ledit réservoir de stockage (2). Les bielles (11, 12), disposées à l'intérieur du réservoir de stockage (2), sont donc protégées. Il n'y a pas d'interférence entre les moyens (10) et les équipements de l'appareil de distribution (1). Les équipements sont par exemple les conduites d'acheminement de graines aux socs. La longueur des bielles (11, 12) est limitée par la taille de l'ouverture. D'une manière préférentielle, chacune des bielles (11, 12) présente une longueur maximale sensiblement égale à la demi-longueur d'une paroi du réservoir de stockage (2). Dans l'exemple de réalisation représenté, le couvercle (5) est manoeuvré par l'intermédiaire de deux poignées (20). On remarque qu'une poignée (20) est disposée au voisinage de la deuxième articulation (14) et que la deuxième poignée (20) est disposée au voisinage de la quatrième articulation (16).

Afin de réduire l'effort d'ouverture et de fermeture du couvercle (5), les moyens (10) comprennent un vérin (17). Le vérin (17) est lié d'une part au réservoir de stockage (2) au moyen d'une cinquième articulation (18) et d'autre part au couvercle (5) au moyen d'une sixième articulation (19). La cinquième articulation (18) est disposée sensiblement en dessous de la première articulation (13). De préférence, la cinquième articulation (18) est disposée sensiblement à la verticale de la première articulation (13). La sixième articulation (19) est, quant à elle, avantageusement placée sur la première bielle (11), approximativement entre la première et la deuxième articulations (13, 14). A la lumière de la figure 3, la première bielle (11) présente une forme courbée. Cette forme courbée a pour avantage d'augmenter le bras de levier du vérin (17). Le vérin (17) est par exemple un vérin à gaz permettant une assistance uniquement à l'ouverture. Le vérin (17) peut également être un vérin électrique.

Lorsque les moyens (10) sont intégrés à l'intérieur du réservoir de stockage (2), il est intéressant de cloisonner ces moyens (10). Le réservoir de stockage (2) comporte donc une cloison permettant d'isoler les bielles (11, 12) et le vérin (17) des graines. Ainsi, le risque d'écraser et d'endommager des graines avec les bielles (11, 12) lors de la fermeture du couvercle (5) est fortement réduit.

Selon un exemple de réalisation non représenté, la paire de bielles (11, 12) est disposée au centre, sensiblement dans un plan vertical médian du réservoir de stockage (2). Ce plan vertical médian pouvant soit être parallèle, soit être perpendiculaire à la direction d'avance (A), selon la direction de dégagement du couvercle (5).

Dans l'exemple de réalisation représenté sur les figures, le couvercle (5) est lié au réservoir de stockage (2) par l'intermédiaire de deux paires de bielles (11, 12). Une paire de bielles (11, 12) est disposée sur la paroi du bord supérieur (6) du réservoir de stockage (2) et l'autre paire de bielles (11, 12) est disposé sur la paroi opposée. La liaison du couvercle (5) au réservoir de stockage (2) via deux paires de bielles (11, 12) permet un guidage stable. De part la grande ouverture de la partie supérieure (3) à contour sensiblement rectangulaire, le couvercle (5) présente une surface correspondante. Le couvercle (5) doit couvrir correctement et protéger la partie supérieure (3) du réservoir de stockage (2) notamment en cas de pluie. Les manoeuvres d'ouverture et de fermeture du couvercle (5) sont aussi facilitées par l'utilisation de deux paires de bielles (11, 12). Pour rigidifier les moyens (10), notamment les bielles (11) de part et d'autre du couvercle (5), elles sont reliées par une structure (21) sensiblement horizontale et parallèle à la direction de travail (A).

L'appareil de distribution (1) présente une passerelle (22) et un marchepied (23) pour faciliter l'accès au réservoir de stockage (2) pour son chargement. On remarque que sur l'appareil de distribution (1) représenté à la figure 1, le réservoir de stockage (2) est disposé au-dessus de l'unité comportant les outils de travail du sol, sa position est donc relativement élevée. L'ouverture de remplissage et le bord supérieur (6) se trouvent alors également dans une position élevée.

Dans l'exemple de réalisation de la figure 1, la passerelle (22) est disposée à l'avant du réservoir de stockage (2) compte tenu de la direction d'avance (A). Grâce à la passerelle (22), l'accès au couvercle (5) et notamment aux poignées (20) est facilité. Les poignées (20) sont prévues sur la face avant du couvercle (5). A la lumière de la figure 3, une paire de bielles (11, 12) est liée d'une part sur la paroi avant comprenant le bord supérieur (6) du réservoir de stockage (2) et l'autre paire de bielles (11, 12) est disposée sur la paroi opposée arrière. Les articulations (13, 15) sont situées au niveau des parois avant et arrière compte tenu de la direction d'avance (A) du réservoir de stockage (2). Les articulations (14, 16) sont, quant à elles, situées sur les faces avant et arrière du couvercle (5) par rapport à la direction d'avance (A). Les articulations (13, 14, 15, 16) présentent chacune un axe sensiblement horizontal et sensiblement parallèle à la direction d'avance (A). Ainsi, le dégagement du couvercle (5) se fait latéralement, dans un plan sensiblement parallèle au plan contenant le bord supérieur (6). De cette manière, les conduites d'acheminement de graines vers les socs disposées à l'arrière du réservoir de stockage (2) ne risquent pas d'être endommagées lors du remplissage.

On remarque que lesdites première et quatrième articulations (13, 16) sont disposées au voisinage d'un des angles du réservoir de stockage (2) respectivement du couvercle (5) et que lesdites deuxième et troisième articulations (14, 15) sont disposées au voisinage du plan vertical médian du réservoir de stockage (2) respectivement du plan vertical médian du couvercle (5). La première articulation (13) est avantageusement disposée sur la paroi avant ou arrière au voisinage de l'angle avec la paroi gauche de la partie supérieure (3). La quatrième articulation (16) est avantageusement disposée sur la face avant au voisinage de l'angle avec la face droite du couvercle (5). La deuxième articulation (14) et la troisième articulation (15) sont disposées au voisinage du plan vertical médian du réservoir de stockage (2) respectivement du couvercle (5). Par la disposition des articulations (13, 14, 15, 16), les bielles (11, 12) permettent un grand dégagement de l'ouverture du réservoir de stockage (2).

Dans la position représentée à la figure 4, le couvercle (5) est ouvert. Le couvercle (5) a été déplacé latéralement vers la droite compte tenu de la direction d'avance (A). Le réservoir de stockage (2) comporte au moins un dispositif de verrouillage (25). Le couvercle (5) est verrouillé dans sa position ouverte au moyen du dispositif de verrouillage (25). Dans cette position, le réservoir de stockage (2) peut être approvisionné en graines. Même si le couvercle (5) est plus exposé au vent dans sa position ouverte, ce dernier conservera sa position dégagée grâce au dispositif de verrouillage (25). Le dispositif de verrouillage (25) se compose d'un loquet pivotant qui bloque la deuxième bielle (12). Dans la position ouverte, la deuxième bielle (12) s'appuie contre une butée (26). Cette butée (26) permet au couvercle (5) de rester à une certaine distance par rapport au bord supérieur (6) du réservoir de stockage (2). Un dispositif de verrouillage pour la position fermée est également prévu pour le couvercle (5).

D'une manière préférentielle, le couvercle (5) est en matière plastique. De manière alternative, le couvercle (5) est entièrement métallique ou réalisé à base d'un matériau composite. Selon une autre alternative, le couvercle (5) est constitué d'une bâche fixée sur une ossature. La forme du couvercle (5) représenté sur les figures est bombée mais un couvercle plus ou moins plat convient également.

Selon un exemple de réalisation non représenté de l'invention, les moyens (10), c'est-à-dire les deux paires de bielles (11, 12), sont prévus sur les parois droite et gauche du réservoir de stockage (2). Ainsi le dégagement du couvercle (5) est réalisé par exemple vers le haut et vers l'arrière du réservoir de stockage (2), tout en restant sensiblement horizontal par rapport au bord supérieur (6). Les articulations (13, 14, 15, 16) sont disposées sensiblement horizontalement et perpendiculairement par rapport à la direction d'avance (A) de l'appareil de distribution (1).

Selon un autre exemple de réalisation non représenté, les moyens (10) sont prévus à l'extérieur du réservoir de stockage (2). De cette manière, la longueur des bielles (11, 12) n'est pas limitée et le dégagement du couvercle (5) peut être plus important et dégager totalement l'ouverture de la partie supérieure (3). Pour une implantation extérieure des moyens (10), l'utilisation d'un vérin à double effet permet une assistance pour l'ouverture et pour la fermeture du couvercle (5).

D'une manière préférentielle, l'actionnement des moyens (10) pour dégager le couvercle (5) se fait de manière automatique. On peut prévoir que l'utilisateur puisse, depuis la cabine du tracteur, commander l'ouverture et la fermeture du réservoir de stockage (2). A cet effet on prévoit par exemple un vérin à double effet ou un moteur électrique qui va actionner les bielles (11, 12). Dans ce cas, le verrouillage du couvercle (5) en position ouverte et en position fermée est également automatique.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Appareil de distribution (1) comprenant un réservoir de stockage (2) avec une partie supérieure (3) et un couvercle (5) permettant de couvrir ladite partie supérieure (3), la partie supérieure (3) présentant un bord supérieur (6), ledit réservoir de stockage (2) présente des moyens (10) permettant un dégagement dudit couvercle (5) dans un plan sensiblement parallèle au plan contenant ledit bord supérieur (6) de ladite partie supérieure (3), ***caractérisé en ce* que** lesdits moyens (10) sont constitués d'au moins une paire de bielles (11, 12) articulée entre ledit réservoir de stockage (2) et ledit couvercle (5) et que lesdites bielles (11, 12) sont disposées de manière à former sensiblement un quadrilatère déformable.

2. Appareil selon la revendication 1, ***caractérisé en ce que*** lesdits moyens (10) permettent un dégagement de plus de la moitié de ladite partie supérieure (3) dudit réservoir de stockage (2).

3. Appareil selon la revendication 1 ou 2, ***caractérisé en ce que*** lesdits moyens (10) permettent un soulèvement et une translation dans un plan sensiblement parallèle au plan contenant ledit bord supérieur (6) pour dégager ledit couvercle (5).

4. Appareil selon la revendication 1, ***caractérisé en ce* que** lesdites bielles (11, 12) sont liées audit réservoir de stockage (2) par l'intermédiaire d'une première articulation (13) respectivement une troisième articulation (15) et sont liées audit couvercle (5) par l'intermédiaire d'une deuxième articulation (14) respectivement une quatrième articulation (16).

5. Appareil selon la revendication 4, ***caractérisé en ce que*** lesdites articulations (13, 14, 15, 16) forment ensemble un parallélogramme, elles présentent chacune un axe sensiblement horizontal.

6. Appareil selon la revendication 4 ou 5, ***caractérisé en ce que*** lesdites première et quatrième articulations (13, 16) sont disposées au voisinage d'un des angles du réservoir de stockage (2) respectivement du couvercle (5) et que lesdites deuxième et troisième articulations (14, 15) sont disposées au voisinage du plan vertical médian du réservoir de stockage (2) respectivement du plan vertical médian du couvercle (5).

7. Appareil selon l'une quelconque des revendications 1 à 6, ***caractérisé en ce que*** lesdits moyens (10) comprennent en sus un vérin (17), le vérin (17) est lié audit réservoir de stockage (2) et à la première bielle (11) au moyen d'une articulation respective (18, 19).

8. Appareil selon l'une quelconque des revendications 1 à 7, ***caractérisé en ce que*** lesdits moyens (10) sont intégrés dans ledit réservoir de stockage (2).

9. Appareil selon l'une quelconque des revendications 1 à 8, ***caractérisé en ce que*** ledit réservoir de stockage (2) comporte un dispositif de verrouillage (25) pour la position ouverte dudit couvercle (5).

## Claims

1. Distribution apparatus (1) comprising a storage tank (2) with an upper part (3) and a cover (5) allowing the said upper part (3) to be covered, the upper part (3) having an upper edge (6), the said storage tank (2) has means (10) allowing a disengagement of the said cover (5) in a plane substantially parallel to the plane containing the said upper edge (6) of the said upper part *(3),* ***characterized in* that** the said means (10) are constituted by at least one pair of rods (11, 12) articulated between the said storage tank (2) and the said cover (5) and that the said rods (11, 12) are arranged so as to form substantially a deformable quadrilateral.

2. Apparatus according to Claim 1, ***characterized in* that** the said means (10) allow a disengagement of more than half of the said upper part (3) from the said storage tank (2).

3. Apparatus according to Claim 1 or 2, ***characterized in* that** the said means (10) permit a raising and a translation in a plane substantially parallel to the plane containing the said upper edge (6) to disengage the said cover (5).

4. Apparatus according to Claim 1, ***characterized in* that** the said rods (11, 12) are linked to the said storage tank (2) by means of a first articulation (13) respectively a third articulation (15) and are linked to the said cover (5) by means of a second articulation (14) respectively a fourth articulation (16).

5. Apparatus according to Claim 4, ***characterized in* that** the said articulations (13, 14, 15, 16) form together a parallelogram, they each have a substantially horizontal axis.

6. Apparatus according to Claim 4 or 5, ***characterized in* that** the said first and fourth articulations (13, 16) are arranged in the vicinity of one of the angles of the storage tank (2) respectively of the cover (5) and that the said second and third articulations (14, 15) are arranged in the vicinity of the median vertical plane of the storage tank (2) respectively of the median vertical plane of the cover (5).

7. Apparatus according to any one of Claims 1 to 6, ***characterized in* that** the said means (10) further comprise a jack (17), the jack (17) is linked to the said storage tank (2) and to the first rod (11) by means of a respective articulation (18, 19).

8. Apparatus according to any one of Claims 1 to 7, ***characterized in* that** the said means (10) are integrated in the said storage tank (2).

9. Apparatus according to any one of Claims 1 to 8, ***characterized in* that** the said storage tank (2) comprises a locking device (25) for the open position of the said cover (5).

## Patentansprüche

1. Verteilungsgerät (1) mit einem Speicherbehälter (2) mit einem oberen Teil (3) und einem Deckel (5), der es ermöglicht, den oberen Teil (3) abzudecken, wobei der obere Teil (3) einen oberen Rand (6) aufweist, wobei der Speicherbehälter (2) Mittel (10) aufweist, die eine Freigabe des Deckels (5) in einer Ebene im Wesentlichen parallel zu der den oberen Rand (6) des oberen Teils (3) enthaltenden Ebene ermöglicht, ***dadurch gekennzeichnet,* dass** die Mittel (10) von mindestens einem Paar Stangen (11, 12) gebildet sind, die zwischen dem Speicherbehälter (2) und dem Deckel (5) angelenkt sind, und dass die Stangen (11, 12) derart angeordnet sind, dass sie im Wesentlichen ein verformbares Viereck bilden.

2. Gerät nach Anspruch 1, ***dadurch gekennzeichnet,* dass** die Mittel (10) eine Freigabe von mehr als der Hälfte des oberen Teils (3) des Speicherbehälters (2) ermöglichen.

3. Gerät nach Anspruch 1 oder 2, ***dadurch gekennzeichnet,* dass** die Mittel (10) ein Anheben und eine Translation in einer Ebene im Wesentlichen parallel zu der den oberen Rand (6) enthaltenden Ebene ermöglichen, um den Deckel (5) freizugeben.

4. Gerät nach Anspruch 1, ***dadurch gekennzeichnet,* dass** die Stangen (11, 12) mit dem Speicherbehälter (2) über ein erstes Gelenk (13) bzw. ein drittes Gelenk (15) und mit dem Deckel (5) über ein zweites Gelenk (14) bzw. ein viertes Gelenk (16) verbunden sind.

5. Gerät nach Anspruch 4, ***dadurch gekennzeichnet,* dass** die Gelenke (13, 14, 15, 16) gemeinsam ein Parallelogramm bilden, wobei sie jeweils eine im Wesentlichen horizontale Achse aufweisen.

6. Gerät nach Anspruch 4 oder 5, ***dadurch gekennzeichnet,* dass** das erste und vierte Gelenk (13, 16) in der Nähe einer der Ecken des Speicherbehälters (2) bzw. des Deckels (5) angeordnet sind, und dass das zweite und dritte Gelenk (14, 15) in der Nähe der vertikalen Mittelebene des Speicherbehälters (2) bzw. der vertikalen Mittelebene des Deckels (5) angeordnet sind.

7. Gerät nach irgend einem der Ansprüche 1 bis 6, ***dadurch gekennzeichnet,* dass** die Mittel (10) zusätzlich einen Zylinder (17) umfassen, wobei der Zylinder (17) mit dem Speicherbehälter (2) und der ersten Stange (11) mittels eines jeweiligen Gelenks (18, 19) verbunden ist.

8. Gerät nach irgend einem der Ansprüche 1 bis 7, ***dadurch gekennzeichnet,* dass** die Mittel (10) in den Speicherbehälter (2) integriert sind.

9. Gerät nach irgend einem der Ansprüche 1 bis 8, ***dadurch gekennzeichnet,* dass** der Speicherbehälter (2) eine Verriegelungsvorrichtung (25) für die offene Position des Deckels (5) umfasst.
